# FASCICULE DE BREVET EUROPEEN

(11) **EP 3 781 461 B1**
(45) Date de publication et mention de la délivrance du brevet: **19.07.2023**
(21) Numéro de dépôt: 19715157.4
(22) Date de dépôt: 06.03.2019
(51) Int. Cl.: B62D 25/20, B62D 25/08, B62D 21/15, B62D 43/10

(54) **STRUCTURE DE CAISSE DE VEHICULE AUTOMOBILE AVEC RENFORT DE TRAVERSE D'ASSISE ARRIÈRE**
KRAFTFAHRZEUGKAROSSERIESTRUKTUR MIT RÜCKSITZGESTELLQUERTRÄGERVERSTÄRKUNG
MOTOR VEHICLE BODY STRUCTURE WITH REAR SEAT BASE CROSSMEMBER REINFORCEMENT

(30) Priorité: 19.04.2018 FR 1853445
(43) Date de publication de la demande: 24.02.2021
(73) Titulaire: PSA Automobiles SA, 78300 Poissy (FR)
(72) Inventeur: BENANE, Said, 94240 L HAY LES ROSES (FR)
(86) Numéro de dépôt international: PCT/FR2019/050502
(87) Numéro de publication internationale: WO 2019/202223

(56) Documents cités:
- WO-A1-2018/029403
- DE-A1-102012 023 863
- DE-A1-102014 223 054

## Description

L'invention a trait au domaine des véhicules automobiles, plus particulièrement aux caisses de véhicule automobile.

Le document de brevet publié FR 3 007 377 A1 divulgue une structure de caisse de véhicule automobile comprenant un plancher avant d'assise de siège arrière et un plancher arrière de charge. Des renforts du plancher d'assise de siège arrière sont disposés sur une face inférieure dudit plancher. Les renforts sont sous forme de plaques. Les renforts s'étendent, de manière évasée, du milieu d'un bord avant du plancher d'assise de siège arrière, vers un bord latéral inférieur du plancher d'assise. Ces renforts sont destinés à améliorer le comportement du véhicule en cas de choc arrière. La structure du véhicule automobile de cet état de l'art alourdit le véhicule automobile. Il manque ainsi d'alléger la structure du véhicule automobile tout en assurant de manière satisfaisante un renforcement de la structure en cas de choc arrière, notamment au niveau de l'assise arrière.

En outre, le document DE 10 2014 223054 A1 divulgue une structure conforme au préambule de la revendication 1.

L'invention a pour objectif de pallier au moins un des inconvénients de l'état de la technique susmentionné. Plus particulièrement, l'invention a pour objectif de proposer une solution permettant d'alléger la structure de caisse de véhicule automobile et de renforcer ladite structure en cas de choc arrière, notamment au niveau de l'assise arrière. L'invention a également pour objectif une solution simple, robuste et économique.

Dans la suite, les termes « avant » et « arrière » sont en relation avec le sens de marche normal d'un véhicule automobile.

L'invention a pour objet une structure de caisse de véhicule automobile comprenant un plancher arrière de charge ; une traverse d'assise de siège arrière, située à l'avant du plancher arrière de charge ; remarquable en ce que la traverse d'assise de siège arrière est à distance du plancher arrière de charge ; et la structure comprend, en outre, un bras s'étendant longitudinalement et reliant ledit plancher à ladite traverse.

Selon l'invention, la traverse d'assise de siège arrière est à une hauteur inférieure à celle d'un bord avant du plancher arrière de charge, le bras présentant une extrémité avant inclinée vers le bas et l'avant, fixée à ladite traverse, de manière à compenser la différence de hauteur.

Selon un mode avantageux de l'invention, le bras forme une poutre de section en U fixée sur la face inférieure du plancher arrière de charge.

Selon un mode avantageux de l'invention, le bras s'étend longitudinalement de manière centrale.

Selon un mode avantageux de l'invention, le plancher arrière de charge forme une cuvette, notamment pour le stockage d'une roue de rechange, le bras présentant un profil non-rectiligne épousant une portion avant de ladite cuvette.

Selon un mode avantageux de l'invention, le bras comprend une première portion épousant la portion avant de la cuvette du plancher arrière de charge, et une deuxième portion épousant une portion généralement plane dudit plancher située à l'avant de ladite portion avant de cuvette.

Selon un mode avantageux de l'invention, le bras comprend une extrémité arrière formant une patte fixée à un fond de la cuvette du plancher arrière de charge.

Selon un mode avantageux de l'invention, la traverse d'assise de siège arrière est un profilé de section en forme de U ou de V formant une ouverture dirigée vers le haut et vers l'avant et comprenant une aile avant et une aile arrière, le bras étant relié à un bord supérieur de ladite aile arrière.

Selon un mode avantageux de l'invention, la traverse d'assise de siège arrière comprend au moins deux pontets s'étendant chacun dans la section en U ou en V de ladite traverse, entre les ailes avant et arrière, de manière à former des surfaces de fixation du ou des sièges arrière.

Selon un mode avantageux de l'invention, la traverse d'assise de siège arrière comprend deux extrémités fixées à deux longerons latéraux intérieurs.

Les mesures de l'invention sont intéressantes en ce que la structure de caisse présente un gain de masse par rapport à l'état de l'art tout en assurant un renforcement du véhicule en cas de choc, plus particulièrement en cas de choc arrière. La traverse d'assise située à distance du plancher arrière permet un gain de masse et une structure plus dynamique par rapport à l'état de l'art. L'invention assure également un renforcement efficace de la structure et plus particulièrement au niveau de la traverse d'assise, en cas de choc arrière, au moyen d'un bras s'étendant longitudinalement et reliant le plancher arrière à ladite traverse. Ainsi, lors d'un choc arrière sur la structure du véhicule, les efforts sont transmis vers le plancher arrière du véhicule. Les efforts sur la traverse d'assise en cas de choc sont limités. Le profil non-rectiligne du bras limite les efforts de traction et de rotation sur ledit bras, en cas de choc. Dans un mode de réalisation, le bras est fixé à une cuvette de stockage de roue de rechange du plancher arrière et présente un profil épousant la forme de la cuvette, limitant ainsi les efforts sur le bras en cas de choc. L'invention présente également l'avantage d'être simple à mettre en oeuvre et peu coûteuse.

D'autres caractéristiques et avantages de la présente invention seront mieux compris à l'aide de la description et des dessins parmi lesquels :
- La figure 1 représente une caisse de véhicule automobile comprenant une structure conformément à l'invention ;
- La figure 2 représente une vue en perspective du plancher arrière et de la traverse d'assise arrière de la structure de caisse de véhicule automobile selon l'invention représentée à la figure 1 ;
- La figure 3 représente une vue de dessus de la structure de caisse de véhicule automobile représentée à la figure 2 ;
- La figure 4 représente une vue de dessous de la structure de caisse de véhicule automobile représentée aux figures 2 et 3 ;
- La figure 5 représente une vue de profil du bras de la structure de caisse précédemment représentée aux figures 2 à 4.

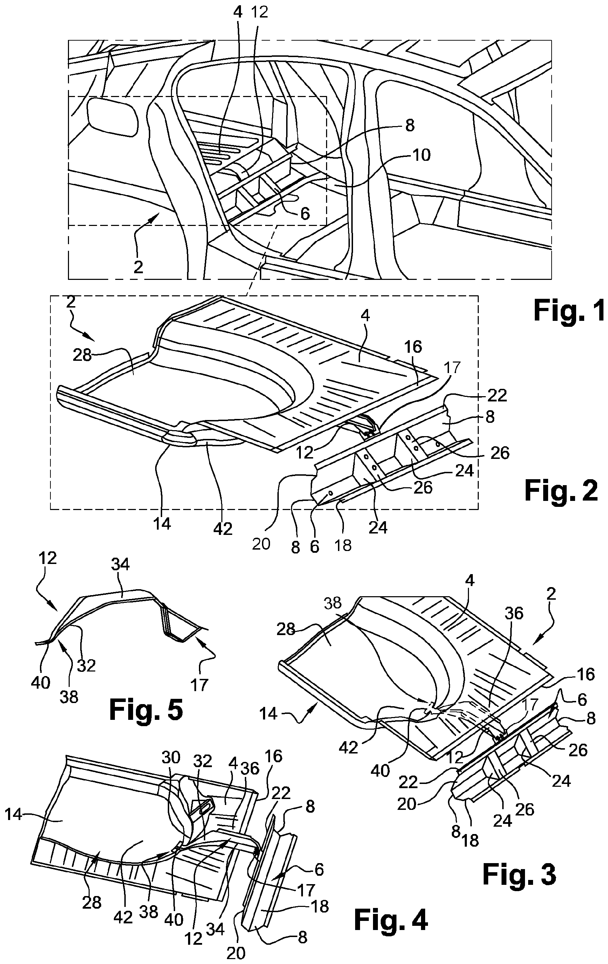

Pour une meilleure compréhension de l'invention, les figures 1 à 5 seront décrites ensemble.

La structure 2 de caisse de véhicule automobile comprend un plancher arrière 4 de charge et une traverse d'assise 6 de siège arrière. La traverse d'assise 6 est située à l'avant du plancher arrière 4 de charge. La traverse d'assise 6 est située à distance du plancher arrière 4 de charge. La traverse d'assise 6 est à une distance du plancher arrière 4 supérieure à 10 mm et/ou inférieure à 500 mm. La traverse d'assise 6 de siège arrière comprend deux extrémités 8 fixées à deux longerons latéraux intérieurs 10.

La fixation de la traverse d'assise 6 à distance du plancher arrière 4 permet de rendre la structure dynamique et un gain de masse sur la structure 2 du véhicule automobile.

Afin d'assurer la sécurité de la structure 2 en cas de choc sur le véhicule et notamment en cas de choc arrière, la structure comprend, en outre, un bras 12 s'étendant longitudinalement et reliant ledit plancher arrière 4 à la traverse d'assise 6.

Le bras 12 forme une poutre de section en U fixée sur la face inférieure 14 du plancher arrière 4 de charge. Le bras 12 s'étend longitudinalement de manière centrale.

La traverse d'assise 6 de siège arrière est à une hauteur inférieure à celle d'un bord avant 16 du plancher arrière 4 de charge. Le bras 12 présente une extrémité avant 17 inclinée vers le bas et l'avant, fixée à la traverse d'assise 6, de manière à compenser la différence de hauteur entre la traverse d'assise 6 et le bord avant 16 du plancher arrière de charge. La différence de hauteur entre la traverse d'assise 6 et le bord avant 16 du plancher est supérieure à 10 mm et/ou inférieure à 200 mm.

La traverse d'assise 6 de siège arrière est un profilé de section en forme de U ou de V formant une ouverture dirigée vers le haut et vers l'avant et comprenant une aile avant 18 et une aile arrière 20. Le bras 12 est relié à un bord supérieur 22 de ladite aile arrière 20. Plus particulièrement, l'extrémité avant 17 du bras 12 est relié audit bord supérieure 22 de l'aile arrière 20.

La traverse d'assise 6 de siège arrière comprend au moins deux pontets 24 dans la section en U ou en V de ladite traverse 6. Les au moins deux pontets 24 s'étendent chacun entre les ailes avant 18 et arrière 20, de manière à former des surfaces de fixation 26 du ou des sièges arrière. Seuls deux pontets 24 sont représentés.

Selon le mode de réalisation tel que représenté aux figures 1 à 5, le plancher arrière 4 de charge forme une cuvette 28, notamment pour le stockage d'une roue de rechange (non représentée).

Le bras 12 présente un profil non-rectiligne épousant une portion avant 30 de ladite cuvette 28. Plus particulièrement, le bras 12 comprend une première portion 32 épousant la portion avant 30 de la cuvette 28 du plancher arrière 4 de charge, et une deuxième portion 34 épousant une portion 36 généralement plane dudit plancher 4 située à l'avant de ladite portion avant 30 de cuvette 28 (figure 4).

Le bras 12 comprend une extrémité arrière 38 formant de patte 40 fixée à un fond 42 de la cuvette 28 du plancher arrière 4 de charge.

Le profil non-rectiligne du bras 12 permet de limiter les efforts de traction et de rotation sur le bras 12 en cas de choc arrière sur la structure du véhicule.

## Revendications

1. Structure (2) de caisse de véhicule automobile comprenant :
- un plancher arrière (4) de charge ;
- une traverse d'assise (6) de siège arrière, située à l'avant du plancher arrière (4) de charge;
la traverse d'assise (6) de siège arrière étant à distance du plancher arrière (4) de charge ; et la structure (2) comprenant , en outre, un bras (12) s'étendant longitudinalement et reliant ledit plancher (4) à ladite traverse (6), **caractérisée en ce que** la traverse d'assise (6) de siège arrière est à une hauteur inférieure à celle d'un bord avant (16) du plancher arrière (4) de charge, le bras (12) présentant une extrémité avant (17) inclinée vers le bas et l'avant, fixée à ladite traverse (6), de manière à compenser la différence de hauteur.

2. Structure (2) selon la revendication 1, **caractérisée en ce que** le bras (12) forme une poutre de section en U fixée sur la face inférieure (14) du plancher arrière (4) de charge.

3. Structure (2) selon l'une des revendications 1 et 2, **caractérisée en ce que** le bras (12) s'étend longitudinalement de manière centrale.

4. Structure (2) selon l'une des revendications 1 à 3, **caractérisée en ce que** le plancher arrière (4) de charge forme une cuvette (28), notamment pour le stockage d'une roue de rechange, le bras (12) présentant un profil non-rectiligne épousant une portion avant (30) de ladite cuvette (28).

5. Structure (2) selon la revendication 4, **caractérisée en ce que** le bras (12) comprend une première portion (32) épousant la portion avant (30) de la cuvette (28) du plancher arrière (4) de charge, et une deuxième portion (34) épousant une portion (36) généralement plane dudit plancher (4) située à l'avant de ladite portion avant (30) de cuvette (28).

6. Structure (2) selon l'une des revendications 4 à 5, **caractérisée en ce que** le bras (12) comprend une extrémité arrière (38) formant une patte (40) fixée à un fond (42) de la cuvette (28) du plancher arrière (4) de charge.

7. Structure (2) selon l'une des revendications 1 à 6, **caractérisée en ce que** la traverse d'assise (6) de siège arrière est un profilé de section en forme de U ou de V formant une ouverture dirigée vers le haut et vers l'avant et comprenant une aile avant (18) et une aile arrière (20), le bras (12) étant relié à un bord supérieur (22) de ladite aile arrière (20).

8. Structure (2) selon la revendication 7, **caractérisée en ce que** la traverse d'assise (6) de siège arrière comprend au moins deux pontets (24) s'étendant chacun dans la section en U ou en V de ladite traverse (6), entre les ailes avant (18) et arrière (20), de manière à former des surfaces de fixation (26) du ou des sièges arrière.

9. Structure (2) selon l'une des revendications 1 à 8, **caractérisée en ce que** la traverse d'assise (6) de siège arrière comprend deux extrémités (8) fixées à deux longerons latéraux intérieurs (10).

## Patentansprüche

1. Aufbau (2) des Kraftfahrzeugaufbaus mit:
- eine hintere Ladefläche (4);
- ein hinteres Sitzquerträger (6), der sich vor dem hinteren Beladungsboden (4) befindet;
der hintere Sitzträger (6) ist von dem hinteren Lastboden (4) beabstandet; und die Struktur (2) umfasst ferner einen sich in Längsrichtung erstreckenden Arm (12), der den Boden (4) mit dem Querträger (6) verbindet, **dadurch gekennzeichnet, dass** der hintere Sitzträger (6) eine niedrigere Höhe als eine Vorderkante (16) des hinteren Lastbodens (4) hat, wobei der Arm (12) ein nach unten und nach vorne geneigtes vorderes Ende (17) hat, das an dem Querträger (6) befestigt ist, um die Höhendifferenz auszugleichen.

2. Struktur (2) nach Anspruch 1, **dadurch gekennzeichnet, dass** der Arm (12) einen Träger mit U-förmigem Querschnitt bildet, der an der Unterseite (14) des hinteren Lastbodens (4) befestigt ist.

3. Struktur (2) nach einem der Ansprüche 1 und 2, **dadurch gekennzeichnet, dass** sich der Arm (12) in Längsrichtung zentral erstreckt.

4. Struktur (2) nach einem der Ansprüche 1 bis 3, **dadurch gekennzeichnet, dass** der hintere Lastboden (4) eine Mulde (28) bildet, insbesondere zur Lagerung eines Ersatzrades, wobei der Arm (12) ein nicht geradliniges Profil aufweist, das an einen vorderen Abschnitt (30) der Mulde (28) angepasst ist.

5. Struktur (2) nach Anspruch 4, **dadurch gekennzeichnet, dass** der Arm (12) einen ersten Abschnitt (32) aufweist, der sich an den vorderen Abschnitt (30) der Schale (28) des hinteren Lastbodens (4) anschmiegt, und einen zweiten Abschnitt (34) aufweist, der sich an einen im Allgemeinen ebenen Abschnitt (36) des Bodens (4) anschmiegt, der sich vor dem vorderen Abschnitt (30) der Schale (28) befindet.

6. Struktur (2) nach einem der Ansprüche 4 und 5, **dadurch gekennzeichnet, dass** der Arm (12) ein hinteres Ende (38) aufweist, das einen Ansatz (40) bildet, der an einem Boden (42) der Schale (28) des hinteren Lastbodens (4) befestigt ist.

7. Struktur (2) nach einem der Ansprüche 1 bis 6, **dadurch gekennzeichnet, dass** der hintere Sitzquerträger (6) ein U- oder V-förmiges Querschnittsprofil ist, das eine nach oben und nach vorne gerichtete Öffnung bildet und einen vorderen Flügel (18) und einen hinteren Flügel (20) aufweist, wobei der Arm (12) mit einer oberen Kante (22) des hinteren Flügels (20) verbunden ist.

8. Struktur (2) nach Anspruch 7, **dadurch gekennzeichnet, dass** der Rücksitz-Sitzträger (6) mindestens zwei Brücken (24) aufweist, die sich jeweils im U- oder V-förmigen Querschnitt des Querträgers (6) zwischen dem vorderen (18) und dem hinteren (20) Flügel erstrecken, um so Befestigungsflächen (26) des Rücksitzes oder der Rücksitze zu bilden.

9. Struktur (2) nach einem der Ansprüche 1 bis 8, **dadurch gekennzeichnet, dass** der hintere Sitzquerträger (6) zwei Enden (8) aufweist, die an zwei inneren seitlichen Längsträgern (10) befestigt sind.

## Claims

1. Motor vehicle body structure (2) comprising:
- a rear load floor (4);
- a rear seat cross-member (6), located at the front of the rear load floor (4);
the rear seat cross-member (6) being at a distance from the rear load floor (4); and the structure (2) further comprising an arm (12) extending longitudinally and connecting said floor (4) to said cross-member (6), **characterized in that** the rear seat cross-member (6) is at a height lower than that of a front edge (16) of the rear load floor (4), the arm (12) having a front end (17) inclined downwards and forwards, fixed to said cross-member (6), so as to compensate for the difference in height.

2. Structure (2) according to claim 1, **characterized in that** the arm (12) forms a beam of U-shaped cross-section fixed to the lower face (14) of the rear load floor (4).

3. Structure (2) according to either of claims 1 and 2, **characterized in that** the arm (12) extends longitudinally in a central manner.

4. Structure (2) according to one of claims 1 to 3, **characterized in that** the rear load floor (4) forms a bowl (28), in particular for storing a spare wheel, the arm (12) having a non-rectilinear profile matching a front portion (30) of the said bowl (28).

5. Structure (2) according to Claim 4, **characterized in that** the arm (12) comprises a first portion (32) matching the front portion (30) of the bowl (28) of the rear load floor (4), and a second portion (34) matching a generally planar portion (36) of the said floor (4) situated at the front of the said front portion (30) of the bowl (28).

6. Structure (2) according to one of Claims 4 and 5, **characterized in that** the arm (12) comprises a rear end (38) forming a lug (40) fixed to a bottom (42) of the bowl (28) of the rear load floor (4).

7. Structure (2) according to one of claims 1 to 6, **characterized in that** the rear seat cross-member (6) is a profile of U- or V-shaped section forming an opening directed upwards and forwards and comprising a front wing (18) and a rear wing (20), the arm (12) being connected to an upper edge (22) of the said rear wing (20).

8. Structure (2) according to claim 7, **characterized in that** the rear seat base cross-member (6) comprises at least two bridges (24) each extending in the U-shaped or V-shaped section of the said cross-member (6), between the front (18) and rear (20) wings, so as to form fixing surfaces (26) of the rear seat or seats.

9. Structure (2) according to one of claims 1 to 8, **characterized in that** the rear seat base cross-member (6) comprises two ends (8) fixed to two inner lateral longitudinal members (10).
